Europäisches Patentamt

European Patent Office

Office européen des brevets

(11) Publication number: **0 339 136 B1**

# EUROPEAN PATENT SPECIFICATION

(45) Date of publication of patent specification: **10.06.92**

(51) Int. Cl.5: **E04H 6/34**

(21) Application number: **88121277.3**

(22) Date of filing: **20.12.88**

---

(54) **Horizontal circulation type parking apparatus.**

---

(30) Priority: **28.04.88 JP 56566/88**
**28.04.88 JP 56567/88**

(43) Date of publication of application:
**02.11.89 Bulletin 89/44**

(45) Publication of the grant of the patent:
**10.06.92 Bulletin 92/24**

(84) Designated Contracting States:
**CH DE FR GB IT LI**

(56) References cited:
**GB-A- 1 213 236**
**JP-Y- 4 315 059**
**US-A- 3 896 955**

(73) Proprietor: **NISSEI LIMITED**
**No. 18-17, Nishi-Shinbashi 1-chome Minato-ku**
**Tokyo(JP)**

(72) Inventor: **Ishijima, Takeo**
**No. 1122-1, Wakashiba-cho**
**Ryugasaki-shi Ibaragi-ken(JP)**
Inventor: **Imamura, Tatsumasa**
**No. 8-10, Minami-Yukigaya 1-chome**
**Ohta-ku Tokyo(JP)**
Inventor: **Abe, Yoshiaki**
**No. 12-9, Kachidoki 2-chome**
**Chuo-ku Tokyo(JP)**
Inventor: **Hirayama, Shigenori**
**No. 2-15, Chuo 2-chome**
**Warabi-shi Saitama-ken(JP)**

(74) Representative: **Liebau, Gerhard, Dipl.-Ing.**
**Birkenstrasse 39 Postfach 22 02 29**
**W-8900 Augsburg 22(DE)**

Rank Xerox (UK) Business Services

# Description

The present invention relates to a horizontal circulation type parking apparatus of the type in which an arbitrary number of trays with traversing wheels disposed on said trays on which vehicles or the like are placed are juxtaposed horizontally to form a row of trays, a plurality of such rows of trays are arranged horizontally in parallel with each other, a dead space for one vehicle is formed at each opposite end portion on one diagonal line thereof, said trays are moved and circulated by a two-step system by the operation of longitudinally conveying devices and transversely conveying devices.

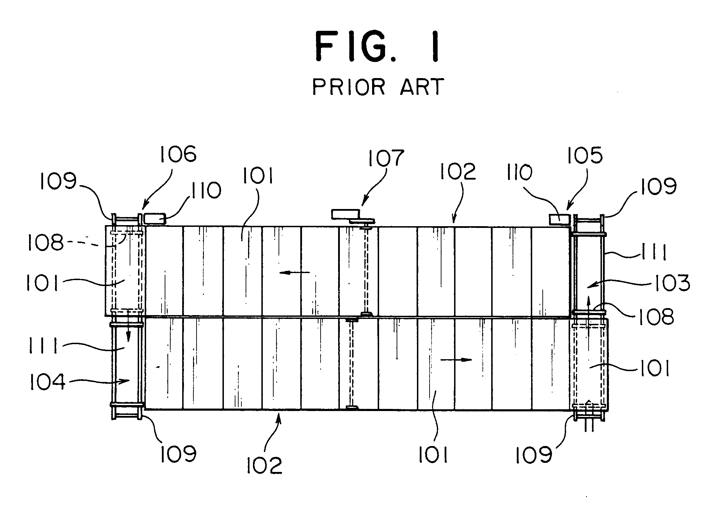

A horizontal circulation type parking apparatus of the above-described type is already known through "Planar Circulation Type Parking Apparatus" disclosed in Japanese Utility Model Registration No. 861,562 (Japanese Utility Model Publication no. 15059/1968). This parking apparatus is shown in Fig. 1 and arranged as follows: An arbitrary number of trays 101 with traversing wheels are arranged in parallel in a horizontal direction so as to constitute a row 102 of trays, and two such rows 102 of trays are arranged in parallel in a horizontal direction. Dead spaces 103, 104 are respectively formed at opposite end portions on one diagonal line X - X, and the trays 101 are circulated consecutively by a two-step method by means of longitudinally conveying devices 105, 106 and a transversely conveying device 107 (hereafter, the longitudinal direction of the tray will be referred to as the longitudinal direction and the transverse direction thereof as the transverse direction).

The longitudinally conveying device is arranged as follows: A plurality of moving rails 108 are provided on a pair of roller chains stretched between a pair of sprockets 109 driven by a motor 110 and respectively disposed at adjacent end portions of each row 102 of trays such as to project laterally therefrom, the moving rails 108 being arranged perpendicularly of said roller chains 111 and at intervals corresponding to the pitches of conveyance of the trays. In addition, guide rollers provided on both sides of the moving rails 108 are moved along guide rails (not shown).

The above-described longitudinally conveying device must be arranged such that the longitudinally conveying chains 111 must be circulated at the position exceeding the longitudinally outer end portion of the tray 101 at opposite ends of the rows 102 of trays. For that reason, the length of the longitudinally conveying chains 111 becomes very large, the guide rails for supporting the same also become very long, and the motor 110 for driving the chains 111 must be provided in such a manner as to project outwardly of the longitudinally outer end of the tray 101.

Hence, in addition to the space for the trays and the traveling rails for moving the trays, which is normally required as a minimum requirement, this parking apparatus requires extra spaces for the sprockets 109, the motors 110, and the chains 111 that are located outwardly of this space. Hence, there have been drawbacks in that the efficiency of utilization of the space for installation of a parking apparatus is lowered, and the structure is complicated, resulting in higher product costs.

Accordingly, an object of the present invention is to provide a horizontal circulation type parking apparatus which is capable of making effective use of the installation space as a whole without requiring a wasteful space for installation and which has a simple structure to reduce costs, thereby overcoming the above-described drawbacks of the conventional art.

According to the present invention, there is provided a horizontal circulation type parking apparatus of the type in which an arbitrary number of trays with traversing wheels disposed on said trays on which vehicles or the like are placed are juxtaposed horizontally to form a row of trays, a plurality of such rows of trays are arranged horizontally in parallel with each other, a dead space for one vehicle is formed at each of opposite end portions on one diagonal line thereof, the trays are moved and circulated by a two-step system by the operation of longitudinally conveying devices and transversely conveying devices, characterized by wheels for longitudinal traveling of trays disposed on the trays in a direction perpendicular to the direction of the wheels for traversing of trays; longitudinally conveying rails respectively provided at opposite end portions of transversely conveying rails for allowing the wheels for longitudinal traveling of trays to travel in a direction perpendicular to the direction of the traversing rails; and carrying members each provided at a portion of each of the longitudinally conveying rails where the longitudinally traveling wheel is moved and mounted thereon, so as to carry said longitudinally traveling wheel and to move and mount the same onto the longitudinally conveying rail.

In the parking apparatus according to the present invention, as for a tray which has been sent to the position of the beginning end of longitudinal conveyance by the transversely conveying device, its longitudinally travelling wheels are mounted on the longitudinally conveying rails via the carrying members, and the longitudinally traveling wheels travel on the longitudinally conveying rails by the operation of the longitudinally conveying device. Hence, it becomes unnecessary to install longitudinally conveying devices for longitudinal conveyance of trays and their related equipment in a space other than the space occupied by the trays, thereby making it posible to reduce the overall space for installation of the parking apparatus.

Another object of the present invention is to provide a horizontal circulation type parking apparatus in which a shift to longitudinal movement of a tray after completion of transverse movement of the tray by a transversely conveying device as well and vice versa can be effected smoothly.

To this end, according to preferred embodiments of the present invention, the carrying members are formed as swinging and righting arms each having an arcuate surface, the diameter of the longitudinally traveling wheel is set be greater than that of the traversing wheel, or the height of the surface of the transversely conveying rail where the traversing wheels travel and the height of the surface of the longitudinally conveying rail at a portion where the two rails intersect each other are made different.

In addition, the aforementioned objects can be attained by providing another preferred embodiment of the invention in which the longitudinally conveying device has a drive mechanism provided at a lower portion of the longitudinally conveying rail, an endless chain driven by the drive mechanism, and a traction roller provided on the endless chain, a lower portion of the tray is provided with an engaging portion where the traction roller is engaged or disengaged therewith, the traction roller being engaged with the engaging portion at the beginning end of the longitudinally conveying device and being disengaged therewith at a terminating end thereof.

The above and other objects, features and advantages of the present invention will become more apparent from the following detailed description of the invention when read in conjunction with the accompanying drawings.

Fig. 1 is a schematic top plan view of a conventional typical horizontal circulation type parking apparatus;

Fig. 2 is an overall schematic top plan view of a horizontal circulation type parking apparatus in accordance with a first embodiment of the present invention;

Fig. 3 is an enlarged view of a portion encircled with an arrowed line 3 of Fig. 2, trays being represented with a long and two short dashes line;

Fig. 4 is a cross-sectional view taken along the line 4 - 4 of Fig. 3 in the direction of the arrows;

Fig. 5 is an enlarged view of a transversely conveying rail and a longitudinally conveying rail in a portion encircled by an arrowed line 5 of Fig. 3;

Fig. 6 is a cross-sectional view taken along the line 6 - 6 of Fig. 4 in the direction of the arrows;

Fig. 7 is a partial front elevational view of a section for transverse conveyance of trays in the aforementioned embodiment;

Fig. 8 is a view, which is similar to Fig. 7, of a modification of the section for longitudinal conveyance of trays;

Fig. 9 is a view, which is also similar to Fig. 7, of another modification of the section for longitudinal conveyance of trays;

Fig. 10 is a partial view, which is similar to Fig. 3, of a second embodiment of a horizontal circulation type parking apparatus in accordance with the present invention;

Fig. 11 is a partial view thereof, which is similar to Fig. 5 illustrating the first embodiment;

Fig. 12 is a partial view thereof, which is similar to Fig. 4 illustrating the first embodiment;

Fig. 13 is a top plan view of the longitudinally conveying section of a horizontal circulation type parking apparatus in accordance with a third embodiment of the present invention;

Fig. 14 is a front elevational view of Fig. 13 taken in the direction of the arrows 14 - 14;

Fig. 15 is a detailed diagram of a part of an endless chain for longitudinal conveyance of trays in accordance with the aforementioned embodiment;

Fig. 16 is a diagram illustrating relative positional relationships among the trays, the transversely conveying rail, the longitudinally conveying rail, and the endless chain for longitudinal conveyance in accordance with the aforementioned embodiment;

Fig. 17 is a front elevational view of a part of Fig. 16;

Fig. 18 is a partial diagram, which is similar to Fig. 13, of a horizontal circulation type parking apparatus in accordance with a fourth embodiment of the present invention;

Fig. 19 is a diagram of the longitudinally conveying section taken in the direction of the arrows 19 - 19 of Fig. 18;

Fig. 20 is a diagram of a part of the longitudinally conveying section taken in the direction of the arrows 20 - 20 of Fig. 18; and

Fig. 21 is a diagram of a part of the longitudinally conveying section taken in the direction of the arrows 21 - 21 of Fig. 18.

(First Embodiment)

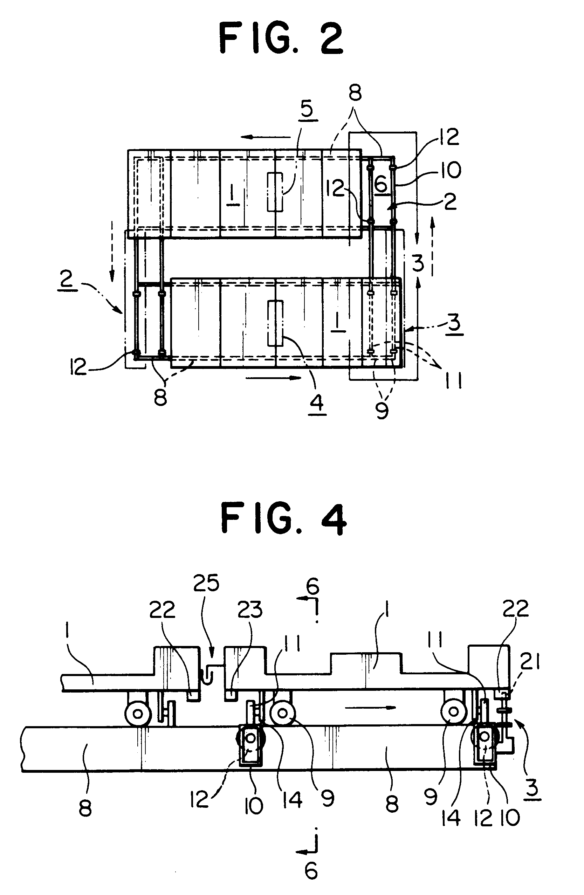

In Fig. 2, reference numeral 1 denotes a tray which is being moved and circulated with an automobile or the like placed or not placed thereon; 2 denotes a left-hand device for longitudinal conveyance of trays; 3 denotes a right-hand device for longitudinal conveyance of trays; 4 denotes a front device for transverse conveyance of trays; and 5 denotes a rear device for transverse conveyance of trays.

The transversely conveying devices 4, S may be similar to those of the above-described conventional parking apparatus, but those disclosed in Japanese Patent Publication No. 31023/1970 are preferably used.

The trays 1 are arranged in an arbitrary number in two rows in parallel with and adjacent to each other within an identical plane, dead spaces 6, 7 each formed by one tray are respectively provided at opposite end portions on one diagonal line thereof. Provided on the rear surface of the tray 1 are four traversing wheels 9 adapted to travel on fixed, transversely conveying rails 8 and disposed in pairs in front and in rear and on the left and the right, as well as four longitudinally traveling wheels 11 arranged in such a manner as to travel on fixed, longitudinally conveying rails 10.

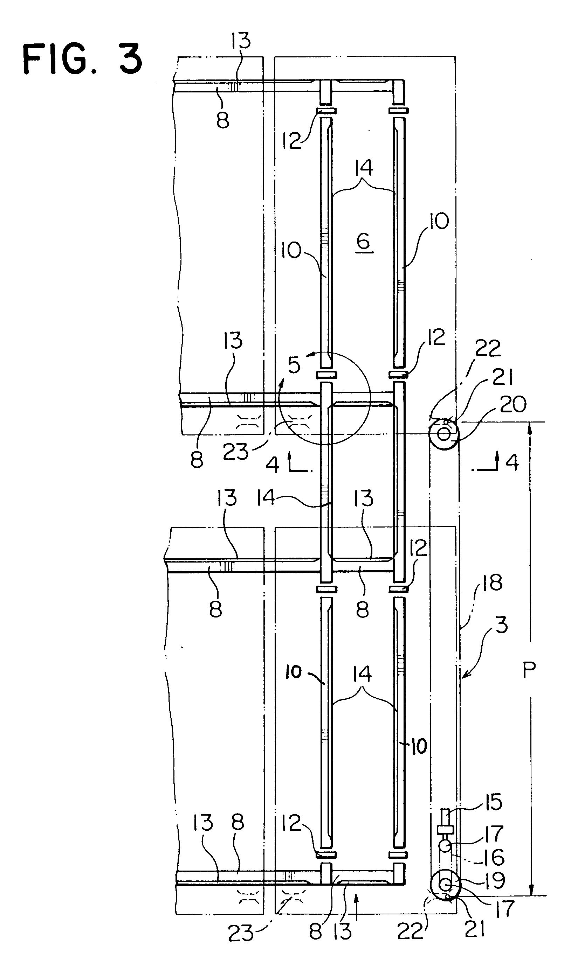

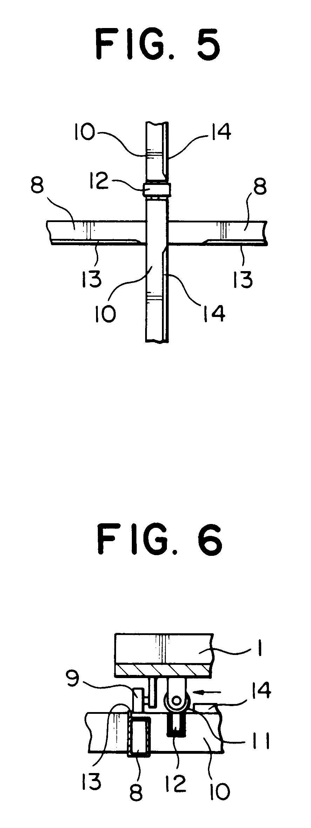

In addition, as shown in Figs. 3 and 5, a carrying member, e.g., an auxiliary roller 12, on which a longitudinally traveling wheel 11 is mounted at the time of longitudinal conveyance is rotatably provided at an upward opening portion of the longitudinally conveying rail 10 in the vicinity of its inner side where the transversely conveying rail 8 and the longitudinally conveying rail 10 intersect each other. The transversely conveying rail 8 and the longitudinally conveying rail 10 are respectively provided with a transversely conveying guide 13 and a longitudinally conveying guide 14 to ensure that the traversing wheels 9 and the longitudinally traveling wheels 11 will not derail while traveling on the rails 8, 10.

Since both longitudinally conveying devices 2, 3 have similar structures, a description will be given of the longitudinally conveying device 3.

This longitudinally conveying device 3 comprises a geared motor 15; a pair of front and rear drive sprockets 17 between which a drive chain 16 connected to the motor 15 via a pair of bevel gears (not shown) is stretched; and a longitudinally conveying drive sprocket 19 and a driven sprocket 20 between which two endless chains 18 driven thereby are stretched.

In this case, the pair of longitudinally conveying sprockets 19, 20 are disposed at a distance therebetween corresponding to a stroke necessary for longitudinally conveying a tray from the front row of trays to the rear row of trays. To pins 21 are provided on the two upper and lower endless chains 18 in correspondence with a longitudinally conveying pitch P (see Fig. 3) in such a manner as to span the upper chain and the lower chain to prevent movement of the pins 21. These pins 21 are adapted to engage with a groove-like engaging portion 22 provided at an end portion of the rear surface of the tray 1, while the other engaging portion 23 is adapted to engage with the pins 21 or the longitudinally conveying device 2.

In addition, at the portion where the transversely conveying rail 8 and the longitudinally conveying rail 10 intersect each other, there is a portion where the transversely conveying guide 13 and the longitudinally conveying guide 14 are not provided. Consequently, the length of couplers 25 is determined in such a manner that, during longitudinal conveyance, the coupler 25 for the tray 1 located at an adjacent transversely conveying position and the coupler 25 for the tray 1 located in the longitudinally conveying section will be engaged with each other while the wheels 9, 11 of the tray 1 are located at the portions where the guides 13, 14 are not provided, thereby preventing the traveling tray 1 from becoming free.

In Fig. 2, the trays 1 are moved and circulated synchronously and simultaneously by the operation of the left- and right-hand longitudinally conveying devices 2, 3 and the front and rear transversely conveying devices 4, 5 in the direction of the arrows of the dotted lines and the arrows of the solid lines in accordance with a two-step method so as to allow automobiles to enter or leave the parking apparatus. In this case, as shown in Figs. 4 and 6, when each of the trays 1 connected to each other by the couplers 25 is conveyed transversely, the traversing wheels 9 travel on the transversely conveying rails 8 (the longitudinally conveying wheels 11 are free), and the longitudinally traveling wheels 11 are smoothly moved and mounted onto the auxiliary rollers 12, to allow longitudinal conveyance to be effected.

In this case, when the transverse conveyance of the trays 1 by the transversely conveying devices 4, 5 is completed, the endless chains 18 rotate within a horizontal plane by the operation of the longitudinally conveying devices 2, 3. As for the longitudinally conveying device 3, as shown in Fig. 3, the pins 21 secured to these chains 18 are engaged with the engaging portion 22 provided on the rear surface of the tray, and the tray 1 is moved rearwardly with the movement of the pins 21. Subsequently, the engagement of the coupler 25 is canceled, and the tray 1 is moved to the position of the dead space 6, and, at the same time, another tray 1 is moved to the dead space 7 by the other longitudinally conveying device 2, so that longitudinal conveyance based on the two-step driving method is completed.

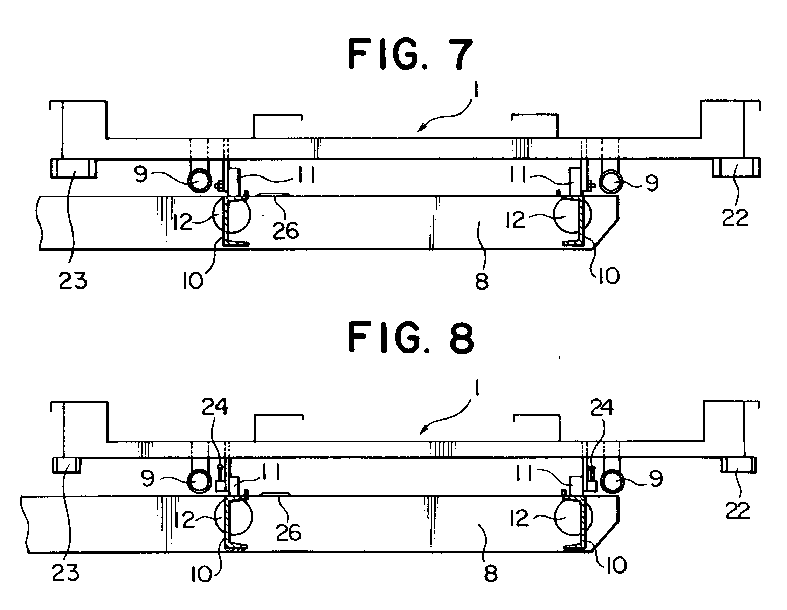

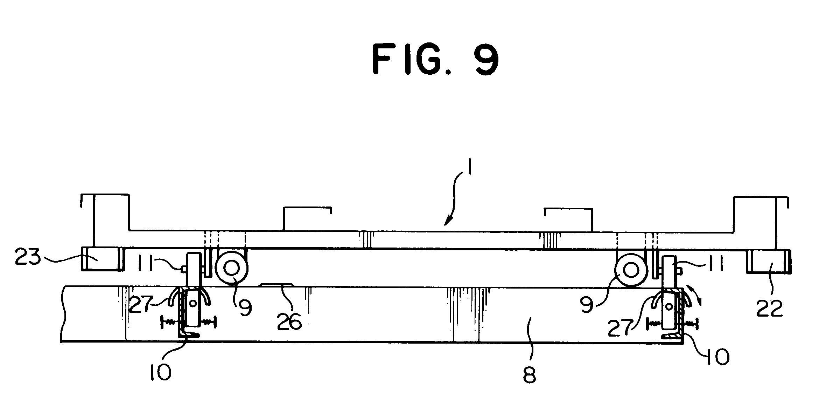

It should be noted that, in this embodiment, a description has been given of a case where the transversely conveying rails 8 and the longitudinally conveying rails 10 are on the same level, and when the trays 1 undergo a shift from transverse conveyance to longitudinal conveyance, the longitudinally traveling wheels 11 are mounted on carrying members, e.g., auxiliary rollers 12. However, to attain a similar object, an arrangement may be alternatively provided, as shown in Fig. 7, in which the auxiliary rollers 12 are used, and the diameter of the longitudinally traveling wheel 11 is made larger than that of the traversing wheel 9. Alternatively, an arrangement may be provided, as shown in Fig. 8, in which the auxiliary rollers 12 are used, and the position of installation of the longitudinally traveling wheels 11 is set lower than that of the traversing wheels 9 by means of adjusting bolts 24 or the like. Furthermore, an arrangement may be alternatively provided, as shown in Fig. 9, in which the auxiliary rollers are not used, and swinging and righting arms 27 each having an arcuate surface and urged by a spring are provided on the rails 10. In the respective cases, a floating plate 26 for floating the longitudinally traveling wheels 11 when the tray 1 passes the longitudinally traveling wheels 11 above the carrying members 12 or the righting arms 27 is provided on the transversely conveying rail 8.

(Second Embodiment)

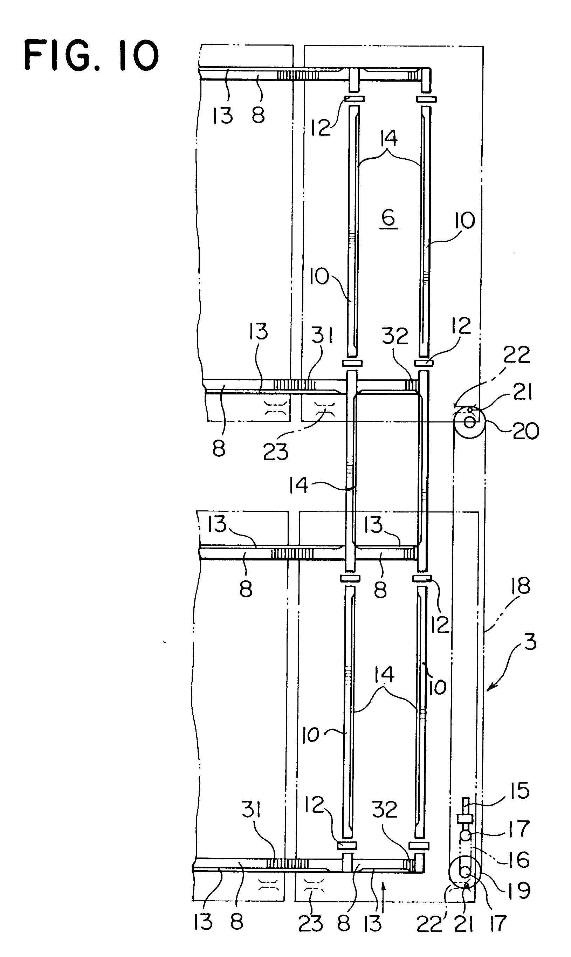

Figs. 10 to 12 illustrate a second embodiment of the present invention. Since this embodiment has an arrangement similar to that of the first embodiment in respect of many portions, so that a description of such similar portions will be omitted by denoting them by the same reference numerals, and a description will mainly be given of different portions.

In this embodiment, at the time of longitudinal conveyance, with respect to the trays 1 which have traversed with the traversing wheels 9 on the transversely conveying rails 8, the longitudinally traveling wheels 11 are moved and mounted onto the auxiliary rollers 12 provided on the longitudinally conveying rails 10. At that time, to ensure that the mounting on the rollers will be effected smoothly, stepped portions 31, 32 are formed on the upper surface of the rail 8 at the portion where the rails 8, 10 intersect each other, so that the upper surface of the rail 10 will be at the same level as the upper surfaces of the stepped portions 31, 32. As a result, the level of the longitudinally conveying rail 10 becomes slightly (several millimeters) higher than the level of the transversely conveying rail 8.

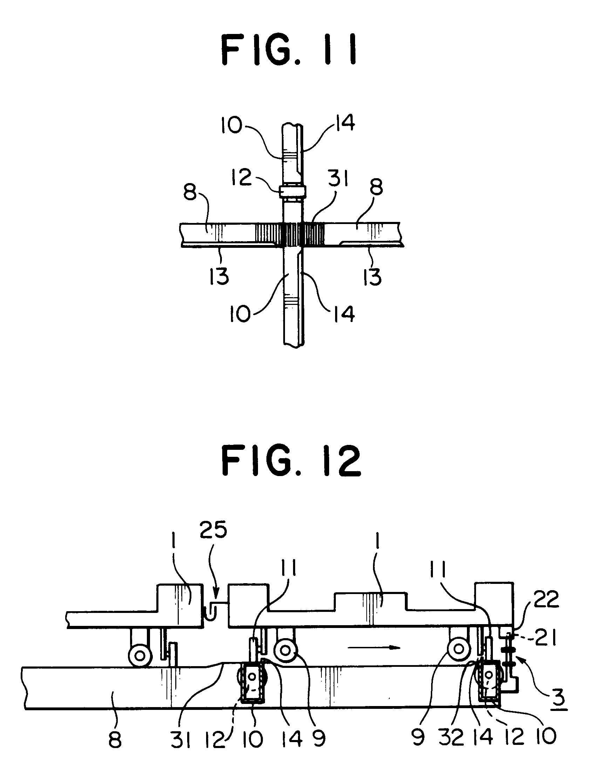

By virtue of such an arrangement, as the transversely conveying device 4 is operated, the trays 1 connected to each other by means of the couplers 25 are traversed with the traveling of the traversing wheels on the transversely conveying rails 8. Subsequently, simultaneously as the traversing. wheels 9 of the leading tray 1 rise on the stepped portions 31, 32, the longitudinally traveling wheels 11 float, are mounted on the auxiliary rollers 12, and stop. Then, the traversing wheels 9 float by being slightly spaced apart from the upper surfaces of the transversely conveying rails 8, as shown in Fig. 12, so that, at the time of longitudinal conveyance of the tray 1, the traversing wheels 9 are not brought into contact with the upper surfaces of the rails 8, thereby allowing longitudinal traveling to be effected.

It should be noted that, to attain a similar object, instead of providing stepped portions on the transversely conveying rails 8, stepped portions may be provided on the longitudinally conveying rails 10 and carrying members, e.g., auxiliary rollers, may be provided on the transversely conveying rails 8 so as to make the level of the transversely conveying rails 8 slightly higher than that of the longitudinally conveying rails 10. In addition, instead of the auxiliary rollers, mechanisms of the first embodiment shown in Figs. 7 to 9 may be adopted as the carrying members.

As is evident from the above-described embodiments, in the present invention, the endless chain 18 is stretched between the sprockets 19, 20 which are virtually situated at the front transversely conveying rail 8 of one row of trays, i.e., the front row of trays with respect to the longitudinally conveying device 3 with reference to Fig. 2, and the front transversely conveying rail 8 of the rear row of trays, the length of the endless chain 18. Accordingly, if the longitudinally conveying device is installed in the same way as the one shown in Fig. 1, the traveling distance of the chain 18 becomes virtually half the one shown in Fig. 1, so that the overall length of the chain can be shortened correspondingly. In addition, the overall longitudinally conveying device can be disposed within the installation space occupied by all the trays. Consequently, the installation space can be decreased substantially as compared with the one shown in Fig. 1, so that it is possible to make effective use of the installation space, and since its structure is simple, it is possible to provide the parking apparatus at low costs.

it should be apparent to those skilled in the art that certain obvious alterations and modifications may be made in the preferred embodiments, and it is intended to include all such alterations and modifications as part of the present invention, insofar as they come within the scope of the appended claims.

**Claims**

1. A horizontal circulation type parking apparatus of the type in which an arbitrary number of trays (1) with traversing wheels (9) disposed on said trays (1) on which vehicles or the like are placed are juxtaposed horizontally to form a row of trays, a plurality of such rows of trays (1) are arranged horizontally in parallel with each other, a dead space (6, 7) for one vehicle is formed at each of opposite end portions on one diagonal line thereof, said trays (1) are moved and circulated by a two-step system by the operation of longitudinally conveying devices (2, 3) and transversely conveying devices (4, 5), characterized by

wheels (11) for longitudinal traveling of trays (1) disposed on said trays in a direction perpendicular to the direction of said wheels (9) for traversing of trays;

longitudinally conveying rails (10) respectively provided at opposite end portions of transversely conveying rails (8) for allowing allowing said said wheels (11) for longitudinal traveling of trays (1) to travel in a direction perpendicular to the direction of said traversing rails (8), and

carrying members (12, 27) each provided at a portion of each of said longitudinally conveying rails (10) where said longitudinally traveling wheel (11) is moved and mounted thereon, so as to carry said longitudinally traveling wheel (11) and to move and mount the same onto said longitudinally conveying rail (10).

2. A horizontal circulation type parking apparatus according to Claim 1, wherein said carrying members are constituted by auxiliary rollers (12).

3. A horizontal circulation type parking apparatus according to Claim 1, wherein said carrying members are constituted by swinging and righting arms (27) each having an arcuate surface.

4. A horizontal circulation type parking apparatus according to Claim 1, wherein the diameter of said longitudinally traveling wheel (11) is made larger than that of said traversing wheel (9).

5. A horizontal circulation type parking apparatus according to Claim 1, wherein the installation position of said longitudinally traveling wheels (11) is set to be lower than that of said traversing wheels (9).

6. A horizontal circulation type parking apparatus according to Claims 1 to 5, wherein the height of the surface of said transversely conveying rail (8) where said traversing wheels (9) travel and the height of the surface of said longitudinally conveying rail (10) at a portion where said two rails intersect each other are made different.

7. A horizontal circulation type parking apparatus according to Claims 1 to 6, wherein said longitudinally conveying device (2, 3) has a drive mechanism (15, 16, 17, 19) provided at a lower portion of said longitudinally conveying rail (10), an endless chain (18) driven by said drive mechanism, and a traction roller (21) provided on said endless chain (18), a lower portion of said tray (1) is provided with an engaging portion (23) where said traction roller (21) is engaged or disengaged therewith, said traction roller (21) being engaged with said engaging portion (23) at the beginning end of said longitudinally conveying device (2, 3) and being disengaged therewith at a terminating end thereof.

8. A horizontal circulation type parking apparatus according to Claim 6, wherein said drive mechanism (15, 16, 17, 19) and said endless chain (18) are provided on the outside of the lower portion of said longitudinally conveying rail (10).

## Revendications

1. Appareil de stationnement du type à circulation horizontale, dans lequel un nombre arbitraire de plateaux (1), ayant des roues (9) de déplacement transversal disposées sur les plateaux (1) sur lesquels sont placés des véhicules ou analogues, sont juxtaposés horizontalement afin qu'ils forment une rangée de plateaux, plusieurs rangées de plateaux (1) sont disposées horizontalement en directions parallèles les unes aux autres, un espace mort (6, 7) destiné à un véhicule est formé à chacune des parties opposées d'extrémité suivant une diagonale, les plateaux (1) sont déplacés et entraînés par un système en deux étapes grâce au fonctionnement d'appareils (2, 3) de transport longitudinal et d'appareils (4, 5) de transport transversal, caractérisé par

des roues (11) de déplacement longitudinal des plateaux (1) disposées sur les plateaux en direction perpendiculaire à la direction des roues (9) de déplacement transversal des plateaux,

des rails (10) de transport longitudinal disposés respectivement aux parties opposées d'extrémité des rails de transport transversal (18) afin que les roues (11) de déplacement longitudinal des plateaux (1) puissent se déplacer en direction perpendiculaire à la direction des rails (8) de déplacement transversal, et

des organes de support (12, 27), disposés chacun dans une partie de chacun des rails (10) de transport longitudinal dans laquelle la roue (11) de déplacement longitudinal est déplacée et est montée, afin que la roue de déplacement longitudinal (11) soit supportée et soit déplacée et montée sur le rail (10) de transport longitudinal.

2. Appareil de stationnement du type à circulation horizontale selon la revendication 1, dans lequel les organes de support sont constitués par des rouleaux auxiliaires (12).

3. Appareil de stationnement de type à circulation horizontale selon la revendication 1, dans lequel les organes de support sont constitués par des bras pivotants et de redressement (27) ayant chacune une surface courbe.

4. Appareil de stationnement du type à circulation horizontale selon la revendication 1, dans lequel le diamètre de la roue (11) de déplacement longitudinal est fixé supérieur à celui de la roue (9) de déplacement transversal.

5. Appareil de stationnement du type à circulation horizontale selon la revendication 1, dans lequel la position d'installation des roues (11) de déplacement longitudinal est réglée afin qu'elle soit inférieure à celle des roues de déplacement transversal (9).

6. Appareil de stationnement du type à circulation horizontale selon les revendications 1 à 5, dans lequel la hauteur de la surface du rail de transport transversal (8) sur lequel se déplacent les roues (9) de déplacement transversal et la hauteur de la surface du rail de transport longitudinal (10) dans une partie d'intersection des deux rails sont différentes.

7. Appareil de stationnement du type à circulation horizontale selon les revendications 1 à 6, dans lequel l'appareil de transport longitudinal (2, 3) a un mécanisme d'entraînement (15, 16, 17, 19) placé dans une partie inférieure du rail de transport longitudinal (10), une chaîne sans fin (18) entraînée par le mécanisme d'entraînement, et un rouleau de traction (21) placé sur la chaîne sans fin (18), et une partie inférieure du plateau (1) a une partie de coopération (23) avec laquelle le rouleau de traction (21) vient en coopération ou se sépare, le rouleau de traction (21) étant mis en coopération avec la partie de coopération (33) à l'extrémité initiale de l'appareil de transport longitudinal (2, 3) et en étant séparé à son extrémité finale.

8. Appareil de stationnement du type à circulation horizontale selon la revendication 6, dans lequel le mécanisme d'entraînement (15, 16, 17, 19) et la chaîne sans fin (18) sont placés à l'extérieur de la partie inférieure du rail de transport longitudinal (10).

**Patentansprüche**

1. Parkierapparat des horizontalen Zirkulationstyps der Art, bei der eine beliebige Anzahl von Böden (1), auf denen Fahrzeuge oder dergleichen plaziert sind, mit an den Böden (1) angeordneten Querfahrrädern (9) horizontal nebeneinander angeordnet sind, um eine Reihe von Böden zu bilden, wobei eine Mehrzahl derartiger Reihen von Böden (1) horizontal parallel zueinander angeordnet sind, wobei ein Freiplatz (6, 7) für ein Fahrzeug an jedem der beiden gegenüberliegenden Enden an einer Diagonale hierzu gebildet ist, wobei die Böden (1) durch ein Zwei-Schritt-System durch Betätigung von Längstransporteinrichtungen (2, 3) und Quertransporteinrichtungen (4, 5) bewegt und zirkuliert werden, **gekennzeichnet durch** Räder (11), die an den Böden (1) angeordnet sind, zur Längsbewegung von Böden (1) in einer Richtung senkrecht zu der Richtung der für die Querbewegung der Böden vorgesehenen Räder (9);
Längstransportschienen (10), die jeweils an entgegengesetzten Endabschnitten von Quertransportschienen angeordnet sind, damit die Räder (11) zur Längsbewegung von Böden (1) in einer Richtung senkrecht zu der Richtung der Querschienen bewegbar sind; und
Tragteile (12, 27), die an einem Abschnitt von jeder der Längstransportschienen (10) vorgesehen und montiert sind, wo sich das Längsbewegungsrad (11) bewegt, um das Längsbewegungsrad (11) zu tragen und dasselbe zu bewegen und auf die Längstransportschiene (10) aufzusetzen.

2. Parkierapparat des horizontalen Zirkulationstyps nach Anspruch 1, **dadurch gekennzeichnet,** daß die Tragteile durch Hilfsrollen (12) gebildet sind.

3. Parkierapparat des horizontalen Zirkulationstyps nach Anspruch 1, **dadurch gekennzeichnet,** daß die Tragteile durch schwingende und sich aufrichtende Arme (27) gebildet sind, die je eine gekrümmte Oberfläche aufweisen.

4. Parkierapparat des horizontalen Zirkulationstyps nach Anspruch 1, **dadurch gekennzeichnet,** daß der Durchmesser des Längsbewegungsrades (11) größer gemacht ist als der des Querfahrrades (9).

5. Parkierapparat des horizontalen Zirkulationstyps nach Anspruch 1, **dadurch gekennzeichnet,** daß die Einbaustellung der Längsbewegungsräder (11) tiefer eingestellt ist als die der Querfahrräder (9).

6. Parkierapparat des horizontalen Zirkulationstyps nach Anspruch 1 bis 5, **dadurch gekennzeichnet,** daß die Höhe der Oberfläche der Quertransportschiene (8), auf der die Querfahrräder (9) rollen und die Höhe der Oberfläche der Längstransportschiene (10) in einem Abschnitt, wo sich die zwei Schienen kreuzen, unterschiedlich gemacht sind.

7. Parkierapparat des horizontalen Zirkulationstyps nach Anspruch 1 bis 6, **dadurch gekennzeichnet,** daß die Längstransporteinrichtung (2, 3) einen in einem unteren Abschnitt der Längstransportschiene (10) angeordneten Antriebsmechanismus (15, 16, 17, 19) , eine von dem Antriebsmechanismus angetriebene endlose Kette (18) und eine an der endlosen Kette (18) vorgesehene Zugrolle (20) aufweist, daß unterer Abschnitt des Bodens mit einem Eingriffsteil (23) versehen ist, an welchem die Zugrolle (21) in Eingriff und außer Eingriff bringbar ist, wobei die Zugrolle (21) am Anfang der Längstransporteinrichtung (2, 3) mit dem Eingriffsteil (23) in Eingriff und am Ende derselben außer Eingriff gebracht wird.

8. Parkierapparat des horizontalen Zirkulationstyps nach Anspruch 6, **dadurch gekennzeichnet,** daß der Antriebsmechanismus (15, 16, 17, 19) und die endlose Kette (18) an der Außenseite des unteren Abschnittes der Längstransportschienen (10) vorgesehen sind.

# FIG. I
## PRIOR ART

# FIG. 2

# FIG. 4

# FIG. 3

EP 0 339 136 B1

# FIG. 5

# FIG. 6

# FIG. 7

# FIG. 8

EP 0 339 136 B1

# FIG. 9

14

# FIG. 10

# FIG. 11

# FIG. 12